# EUROPEAN PATENT APPLICATION

(11) **EP 1 985 959 A2**
(43) Date of publication of application: **29.10.2008**
(21) Application number: 08425237.8
(22) Date of filing: 09.04.2008
(51) Int. Cl.: F28F 9/26

(54) **Universal assembly nipple for the connection of an adjustment and/or control apparatus to a resistor suitable to be applied to a radiant body**

(30) Priority: 18.04.2007 IT VI20070115
(71) Applicant: HT S.p.A., 31058 Susegana (TV) (IT)
(72) Inventor: Dall'Anese, Costante, 31058 Susegana TV (IT)
(74) Representative: Iannone, Carlo Luigi

(57) **Abstract**

An universal assembly nipple (1) for the connection of an adjustment and/or control apparatus (T; L) to a resistor (R) suitable to be applied to a radiant body (C), the nipple (1) comprising an union body (2), which is coupled by locking means (3) with the adjustment and/or control apparatus (T; L), and a shaped insert (4) idle with respect to the union body (2), which is placed externally to the resistor (R) and is conjugate to the radiant body (C) through first fastening means (5).

## Description

The attached invention relates to an universal assembly nipple for the connection of an adjustment and/or control apparatus to a resistor R suitable to be applied to a radiant body C.

In particular, the nipple of the invention lends itself to connect a thermostat or a switch to a resistance intended to be inserted into a heating body, such as a towel-heater or an electrical or mixed power radiator, to be home installed.

As known, on the market there are electrically powered devices for the production of heat, such as portable electric radiators, panel or wall installed, commonly known as "towel-heater".

These devices provide as heating element a resistor component of the immersion type, usually contained in one of the tubular elements of the radiator and drowned in the fluid, such as water and/or oil.

The fluid is the propagation and diffusion medium of the thermal power, in the form of heat, released by the radiant body.

Normally, the functioning of the resistor component is automatically handled by an adjustment and control apparatus, usually a thermostat, in connection with a thermally fuse too.

The task of the thermostat is to adjust the temperature of the resistor component, keeping it constant or limiting its variation within a defined range, in the environment in which the radiant body is installed or present.

In practice, the thermostat intervenes when the temperature of the fluid in the radiant body exceeds a prefixed threshold value, set out by the user according to his own needs, interrupting the electricity supply until the temperature of the fluid falls below the aforesaid threshold value.

The thermostat is also traditionally coupled through a specific nipple with the resistor component, compared to which it is located at a certain distance in order to detect the running temperature of the fluid without the alterations due to the direct action of the same resistor component.

The coupling between the thermostat and the resistor component occurs either at place, by means of the installer, or already in production and assembly phase, by means of the constructor.

Under applicative conditions, the thermostat is oriented so that its main face, that is the frontal, is direct outwards so as to be easily and conveniently viewed by the user.

Incidentally the main face of the thermostat contains the buttons available to the user for setting out the temperature, the screen which indicates the temperature and more.

In addition, the specific position taken by the thermostat with respect to the radiant body with which is associated presents also an aesthetic value, able to offer a positive visual impact.

This is mainly achieved by positioning the main face of the thermostat coplanar or on a plane parallel to the plane according to which the radiant body mainly develops.

According to a today widespread practice, the resistor component is often supplied to the installer already connected to the adjustment and/or control apparatus through the nipple previously cited.

More specifically, the resistor component present one end inserted into a through hole made in the nipple with which the end is permanently associated.

The resistor component is electrically connected to the thermostat through junction means, for example crimping on bar pins (also known under the term "faston"), while the nipple is in turn connected to the thermostat through locking means.

The installer, therefore, receives a similar structural group and apply it to the radiant body screwing the nipple to a tubular stretch of the radiant body.

However, such modus operandi involves some recognized drawbacks in the field under discussion.

A first drawback is due to the fact that the thermostat is integral with the nipple and rotates contextually with it during the screwing on the radiant body.

For this reason, it often happens that at the end of the screwing of the nipple in the tubular stretch of the radiant body, the main face of the thermostat is improperly oriented with respect to the optimal view of the user, which results extremely hampered or even obstructed.

Moreover, the aesthetic appearance offered in similar conditions by the application does not certainly seem pleasant and acceptable.

To solve these drawbacks, the installer is so obliged to unscrew from the radiant body the nipple which supports the thermostat-resistor group, apply appropriate thickening means, such as a strip, to the thread and screwing again the nipple to the radiant body until obtaining the correct frontal position of the thermostat.

It is clear how this causes an inevitable increase in the laboriousness of manoeuvres which must be performed by the operator, as well as a lengthening of the overall installation time, with the effect of creating unnecessary additional costs.

This invention aims to remedy the drawbacks just bewailed.

In particular, main purpose of the invention is to provide a nipple, suitable for the connection of an adjustment apparatus to a resistor which is applied to a radiant body, which, once fixed to the latter assure a proper orientation of the adjustment apparatus, allowing an immediate and easy consultation to the user.

It is another purpose of the invention to realize a nipple for connecting an adjustment apparatus to a resistor to be applied to a radiant body which simplifies the work of the installer in comparison with the equivalent nipples of the known type.

Within such a purpose, task of the invention is to develop a nipple for the connection of an adjustment apparatus to a resistor which, with respect to the prior art, reduces the time required to place the adjustment apparatus in the position where it is easily and readily viewed by the user and which, moreover, is correct from an aesthetic point of view. The aforesaid purposes are achieved by means of an universal assembly nipple for the connection of an adjustment and/or control apparatus to a resistor suitable to be applied to a radiant body according to the attached claim 1, to which they refer for the sake of brevity.

Other constructive features of detail of the nipple according to the invention are contained in the corresponding dependent claims.

Advantageously, the invention almost completely eliminates the risk that an adjustment apparatus, such as a thermostat, positions inappropriately for the consultation and for the necessary aesthetic requirements, when combined with a resistor which is applied to a radiant body, such as a radiator.

The nipple of the invention, indeed, allows to arrange the adjustment apparatus coupled with it in the correct and practical reading position for the user already at the end of its first connection to the radiant body.

Still advantageously, just finished the fastening of the nipple of the invention to the radiant body, the thermostat is immediately in the proper position, without the need for additional articulated adjustment steps, typical of the prior art.

This by virtue of the fact that the nipple of the invention comprises at least two parts one distinct to the other which make the adjustment apparatus independent from the rotation of the nipple itself.

The shaped insert, which is connected to the radiant body, is revolving idle with respect to the union body, which supports the resistor and is bound to the adjustment apparatus.

Equally advantageously, the nipple according to the invention simplifies, in comparisons to the known nipples, installer's activity during the application to radiant bodies, such as radiators, components resistors and their adjustment apparatus.

In an advantageous way, the invention also reduces with respect to the present state of the art the time necessary to correctly and efficiently install in a radiant body a resistor and the adjustment apparatus related to it.

In addition, according to a preferred application of the invention, the nipple is sealed, for example with appropriate resins, to the adjustment apparatus.

Such a constructive trick, allowed by the fact that the nipple is made in at least two pieces, ultimately permits to limit with respect to the known technique possible and unadvised tampering of the adjustment and control apparatus.

Additional features and peculiarities of the present invention will be more evident from the description that follows, relative to an illustrative and preferred embodiment, given by way of indicative but not limited title with respect to the attached drawings where:
- figure 1 is a side view of the nipple according to the invention;
- figure 2 is the partly cutaway view of figure 1;
- figure 3 is the partly cutaway view of a first particular of figure 1;
- figure 3a is the bottom plant view of figure 3;
- figure 4 is the partly cutaway view of a second particular of figure 1;
- figure 4a is the plant view of figure 4;
- figure 5 is the partly cutaway view of a third particular of figure 1;
- figure 5a is the plant view of figure 5;
- figures 6 and 7 are cross-section side views of two different applications of the nipple of figure 1.

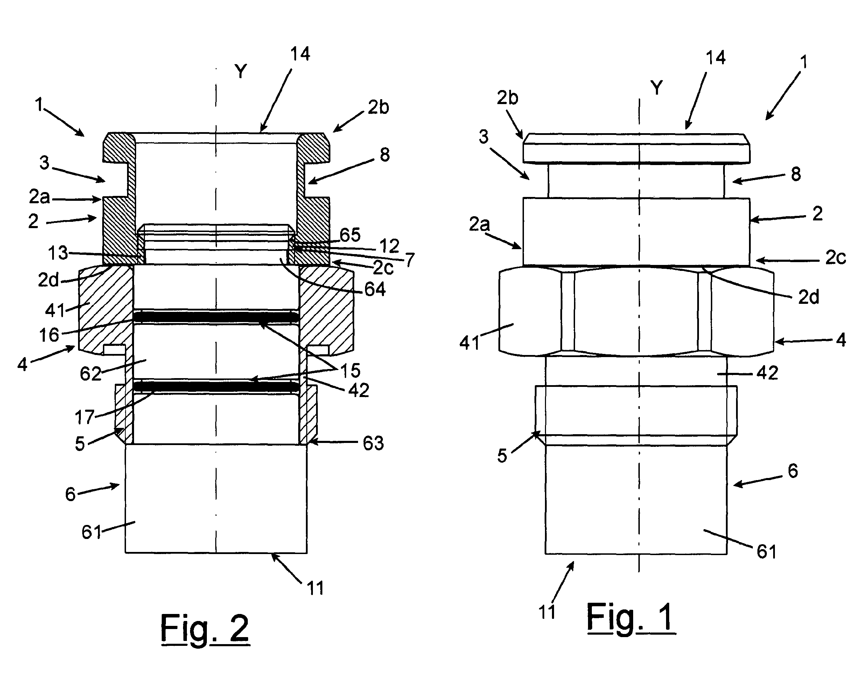

The universal assembly nipple of the invention is shown in figures 1 and 2, where it is globally numbered with 1.

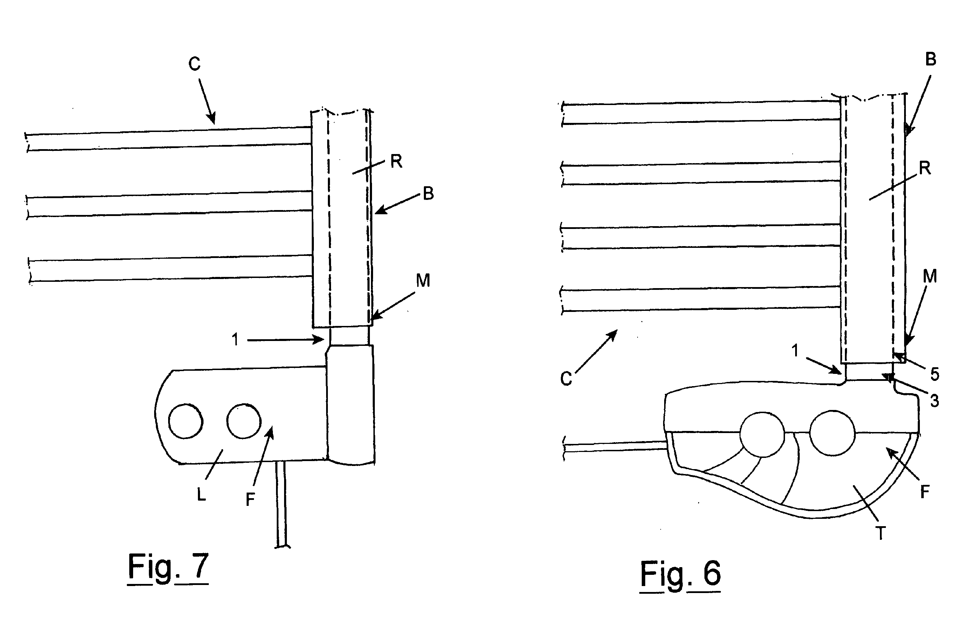

As will be explained later with the help of figures 6 and 7, the nipple 1 is suitable for the connection of an adjustment apparatus T, for example a thermostat, or a control apparatus L, for example a simple switch, to a resistor R which is applied to a radiant body C, such as preferably a radiator for residences. According to the invention, the nipple 1 comprises an union body 2, planned to be coupled with the adjustment and/or control apparatus T, L by locking means, as a whole referred with 3, and a shaped insert 4 idle with respect to the union body 2, suitable to be placed externally to the resistor R and to be conjugate with the radiant body C by first fastening means, as a whole reported with 5.

It observes that the union body 2 and the shaped insert 4 are arranged reciprocally coaxial and one close to the other.

According to the preferred embodiment here describe of the invention, the nipple 1 includes an intermediate support body 6, coupled with the union body 2 through second fastening means, as a whole numbered with 7, and positioned coaxial to the union body 2 and to the shaped insert 4.

Under installation conditions, the intermediate support body 6 stands between the shaped insert 4 and the resistor R, such as consisting of a cylindrical resistance of the immersion type.

The shaped insert 4 partly surrounds the intermediate body 6, with respect to which is idle and revolving around a longitudinal axis of rotation Y.

The locking means 3 preferably but not exclusively include a stud bolt element, not illustrated for the sake of explanatory convenience, which is inserted into a through hole, not visible, made in the adjustment and/or control apparatus T, L, and an annular spline 8, made in the outer wall 2a of the union body 2.

The annular spline 8 is made at a first end 2b of the union body 2 and, under application conditions, receives and houses the end of aforesaid stud bolt element.

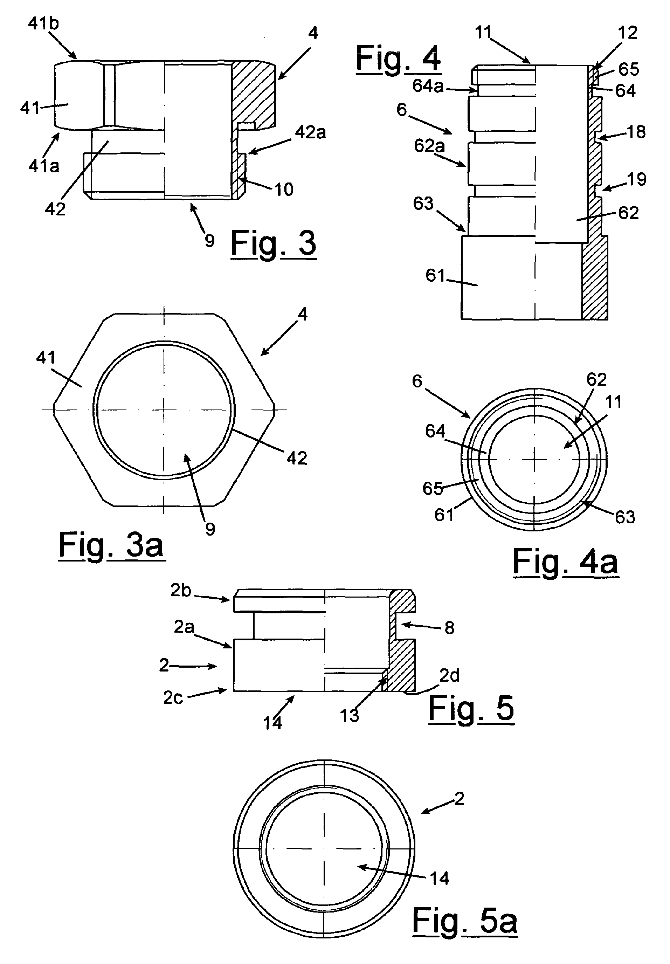

As figures 3 and 3a show, the shaped insert 4 presents an axial through hole 9 into which the intermediate support body 6 is inserted, according to the longitudinal axis Y, the body 6 remaining, however, partly protruding from the shaped insert 4. More in detail, the shaped insert 4 is composed of:
- a hexagonal portion 41, clearly visible in figure 3a, placed close at hand to the lateral edge 2d of the second end 2c of the union body 2;
- a cylindrical portion 42 indented with respect to the hexagonal portion 41 and projecting from a first side face 41a of the hexagonal portion 41.

Referring to the first fastening means 5, they include a screw 10, obtained on an external stretch 42a of the cylindrical portion 42 of the shaped insert 4, and a female screw, not visible and on which engages the screw 10, obtained in a tubular zone B belonging to the radiant body C.

Figures 4 and 4a show that the intermediate support body 6 presents a central through opening 11, positioned coaxial to the through hole 9 of the shaped insert 4, suitable to firmly receive one end of the resistor R.

In particular, as a purely preferential title, the intermediate support body 6 is formed by:
- an annular block 61 which, in application, receives the end of the resistor R and is contained in the radiant body C;
- a tubular element 62, contained in the hexagonal portion 41 and in the cylindrical portion 42 of the shaped insert 4, indented with respect to the annular block 61 with which defines an outer perimetrical shoulder 63 close to which the cylindrical portion 42 of the shaped insert 4 is positioned.

In addition, the tubular element 62 defines with the annular block 61 an inner shoulder, not visible, against which the insertion of the end of the resistor R stops.

The tubular element 62 is in this case provided with an appendix 64, protruding from the second side face 41b of the hexagonal portion 41, as highlighted in figure 2.

On the side surface 64a of the appendix 64 there is an annular raised edge 65.

Preferably but not necessarily, the second fastening means 7 include a male thread 12, made on the annular raised edge 65, and a female thread 13, made in the second end 2c of the union body 2, in which the male thread 12 engages.

As can be seen from figures 5 in the 5a, the union body 2 presents an axial through opening 14 coaxial with the central opening 11 of the intermediate support body 6.

This allows the electrical connection of the resistor R, whose end is contained in the intermediate body 6, to the cables of the adjustment and/or control apparatus T, L through junction means of the known type, among which for example bar pins ("faston").

Figure 2 illustrates that the nipple 1 preferably includes seal means, on the whole numbered with 15, interposed between the shaped insert 4 and the intermediate support body 6.

For purely indicative but not exclusive purpose, the seal means 15 include a pair of annular seals 16, 17, placed in respective annular grooves 18, 19, shown in figure 4, obtained in the side wall 62a of the tubular element 62 of the intermediate support body 6.

It is understood that other embodiments, not shown, could provide a different number, starting from one, of annular seals, varying consequently the number of annular grooves made in said intermediate support body.

Moreover, further executions of the nipple of the invention could be exist where the seal means are placed in a position different from that described above, as well as simply interposed between the inner wall of the shaped insert and the outer wall of the resistor.

Operatively, the assembly of the nipple 1 here claimed starts placing the shaped insert 4 externally coaxial to the intermediate support body 6.

At that stage, the tubular element 62 of the intermediate body 6 passes through the axial hole 9 of the shaped insert 4 until protruding thereof for the appendix 64, while the cylindrical portion 42 of the shaped insert 4 itself puts close to the outer perimetrical shoulder 63.

Subsequently, the male thread 12 placed on the annular raised edge 65 of the appendix 64 is coupled with the female thread 13 of the union body 2.

In this way, the union body 2 is made integral to the intermediate support body 6, while the shaped insert 4 remains idle and free to rotate around its longitudinal axis Y.

The nipple 1 thus obtained is used to connect the adjustment and/or control apparatus T, L of figures 6 and 7 respectively to the resistor R, suitable to be inserted into the radiant body C.

The adjustment and/or control apparatus T of figure 6 constitutes a thermostat while the one of figure 7 indicated with L represents a switch.

Firstly, the resistor R is inserted for an end into the central opening 11 of the intermediate support body 6 till the point where it meets the inner shoulder thereof.

The resistor R is firmly associated by mechanical interference with the intermediate support body 6 and is then connected to the electric cables of the adjustment and/or control apparatus T, L through in themselves known methods in the technical field under consideration, for example crimping.

Finally, the group thus obtained is coupled with the radiant body C, such as an electric radiator, by inserting the resistor R into the tubular zone B and screwing the screw 10 of the shaped insert 4 in the terminal part M of such a tubular zone B.

In the screwing of the screw 10 in the corresponding female thread only the shaped insert 4 rotates, while the other organs remain fixed.

In particular, as far as the technical problem of the present invention is properly concerned, the union body 2, already coupled with the adjustment and/or control apparatus T or L, remains firmly in position. In this way, the adjustment and/or control apparatus T, L takes right now the proper installation position, so that the main face F is direct outside to be easily and snugly accessible by the user in case of need.

The nipple 1 of the invention eliminates the need to perform additional steps, indispensable in the state of the art, on the group applied to the radiant body C, consisting of the resistor R and the adjustment and/or control apparatus T, L, with all the benefits in operative terms and linked to the time of intervention which derive for the installer.

It is reaffirmed that this is possible thanks to the fact that the nipple 1 of the invention is composed by at least two parts separate each other, one of which idle with respect to the other.

This constructive trick releases the part connected to the adjustment and/or control apparatus T, L, i.e. the union body 2, from the rotation of the part which screws on the radiant body C, i.e. the shaped insert 4.

On the basis of what just exposed, it is ascertained that the nipple for the connection of an adjustment and/or control apparatus to a resistor suitable to be applied to a radiant body achieves the purposes and realizes the advantages mentioned above.

Under execution phase, changes can be made to the universal assembly nipple according to the invention, consisting for example in a form of the union body and of the shaped insert different from that shown and described in the course of the result.

Thereunto, in other embodiments of the invention the first fastening means between the union body and the resistor could be of different composition and not provide, for example, the interposition of the intermediate support body previously indicated support, which does not affect the advantage provided by the present patent.

The intermediate support body is preferably used to reciprocally connect the union body and the resistor as a component preferably obtained by turning which poses few problems of dimensional tolerances.

It is clear, then, that many other variations can be made to the nipple in question, without for this reason going out of the novelty principles inherent of the idea inventive, as it is clear that, in the practical implementation of the invention, materials, shapes and sizes of the details could be any, depending on the needs, and could be replaced with other technically equivalent.

## Claims

1. Universal assembly nipple for the connection of an adjustment and/or control apparatus (T; L) to a resistor (R) suitable to be applied to a radiant body (C), **characterized in that** it comprises an union body (2), suitable to be coupled with said adjustment apparatus by locking means (3), and a shaped insert (4) idle with respect to said union body (2), suitable to be placed externally to said resistor (R) and to be conjugate with said radiant body (C) by first fastening means (5).

2. Nipple (1) as claim 1) **characterized in that** said union body (2) and said shaped insert (4) are arranged one coaxial and close to the other.

3. Nipple (1) as claim 2) **characterized in that** it includes an intermediate support body (6), coupled by second fastening means (7) with said union body (2) and positioned coaxial to said union body (2) and said shaped insert (4), suitable to stand between said shaped insert (4) and said resistor (R).

4. Nipple (1) as claim 3) **characterized in that** said shaped insert (4) surrounds said intermediate support body (6), respect to which is idle and revolving around a longitudinal axis of rotation (Y).

5. Nipple (1) as claim 3) **characterized in that** said locking means (3) include a stud bolt, suitable to be inserted into a through hole made in said adjustment and/or control apparatus (T; L), and an annular spline (8), made in the outer wall (2a) of said union body (2), so as to house the end of said stud bolt.

6. Nipple (1) as claim 5) **characterized in that** said annular spline (8) is obtained at a first end (2b) of said union body (2).

7. Nipple (1) as claim 4) **characterized in that** said shaped insert (4) presents an axial through hole (9) into which said intermediate support body (6) is inserted, along said second longitudinal axis (Y), said intermediate body (6) remaining partly protruding from said shaped insert (4).

8. Nipple (1) as claim 4) **characterized in that** said shaped insert (4) includes:
- a hexagonal portion (41) placed close at hand to the lateral edge (2d) of the second end (2c) of the said union body (2);
- a cylindrical portion (42) indented with respect to said hexagonal portion (41) and projecting from a first side face (41a) of said hexagonal portion (41) .

9. Nipple (1) as claim 8) **characterized in that** said first fastening means (5) include a screw (10), obtained in at least an external stretch (42a) of said cylindrical portion (42) of said shaped insert (4), and a female screw, in which said screw (10) engages, obtained in a tubular zone (B) belonging to said radiant body (C).

10. Nipple (1) as claim 7) **characterized in that** said intermediate support body (6) presents a central opening (11), placed coaxial to said axial hole (9) of said shaped insert (4), suitable to firmly receive one end of said resistor (R).

11. Nipple (1) as claim 10) **characterized in that** said intermediate support body (6) consists of:
- an annular block (61) suitable to receive said end of said resistor (R) and to be content in said radiant body (C);
- a tubular element (62), contained in said cylindrical portion (42) and said hexagonal portion (41) of said shaped insert (4), indented with respect to said annular block (61) with which defines an outer perimetrical shoulder (63) close to which said cylindrical portion (42) of said shaped insert (4) is positioned.

12. Nipple (1) as claim 11) **characterized in that** said tubular element (62) defines with said annular block (61) an inner shoulder against which said end of said resistor (R) stops.

13. Nipple (1) as claim 11) **characterized in that** said tubular element (61) is provided with an appendix (64), protruding from the second side face (41b) of said hexagonal portion (41) and on the side surface (64a) of which there is an annular raised edge (65).

14. Nipple (1) as claim 13) **characterized in that** said second fastening means (7) include a male thread (12), obtained in said annular raised edge (65), and a female thread (13), obtained in the second end (2c) of said union body (2), with which said male thread (12) engages.

15. Nipple (1) as claim 10) **characterized in that** said union body (2) presents an axial through opening (14) coaxial to said central opening (11) of said intermediate support body (6) for the electric connection of said resistor (R) to said adjustment and/or control apparatus (T; L).

16. Nipple (1) as claim 11) **characterized in that** it comprises seal means (15) interposed between said shaped insert (4) and said intermediate support body (6).

17. Nipple (1) as claim 16) **characterized in that** said seal means (15) include at least one annular seal (16, 17) placed in at least an annular groove (18, 19) obtained in the side wall (62a) of said tubular element (62) of said intermediate support body (6).
